# EUROPÄISCHE PATENTSCHRIFT

(11) **EP 2 167 407 B1**
(45) Veröffentlichungstag und Bekanntmachung des Hinweises auf die Patenterteilung: **28.09.2011**
(21) Anmeldenummer: 08757286.3
(22) Anmeldetag: 27.06.2008
(51) Int. Cl.: B65G 17/08, B65G 23/06, B65G 15/42

(54) **KONTINUIERLICHES TRANSPORTBAND**
CONTINUOUS TRANSPORTING BELT
BANDE TRANSPORTEUSE CONTINUE

(30) Priorität: 29.06.2007 US 771419; 10.07.2007 CH 11172007
(43) Veröffentlichungstag der Anmeldung: 31.03.2010
(73) Patentinhaber: Habasit AG, 4153 Reinach (CH)
(72) Erfinder: FLEIG, Viola, Ch-5735 Pfeffikon (CH); VON GELLHORN, Edgar, CH-5643 Sins (CH); GULDENFELS, Dieter, CH-4148 Pfeffingen (CH)
(74) Vertreter: Bohest AG
(86) Internationale Anmeldenummer: PCT/CH2008/000293
(87) Internationale Veröffentlichungsnummer: WO 2009/003301

(56) Entgegenhaltungen:
- WO-A-98/33728
- US-A- 5 630 500
- US-A- 5 911 307

## Beschreibung

Die vorliegende Erfindung bezieht sich auf ein kontinuierliches Transportband mit einer Antriebsseite, auf der in Transportbandlaufrichtung gleichmässig beabstandete, quer zur Transportbandlaufrichtung verlaufende Antriebsrippen angeordnet sind gemäß dem Oberbegriff des Anspruchs 1, wie es aus der US 5 911 307 A bekannt ist.

Zum Transport von Lebensmitteln werden heutzutage verschiedenartigste Transportbänder eingesetzt. Diese werden, neben vielen anderen Anwendungsbereichen, auch in hygienisch sensiblen Zonen verwendet. Es kommen hierbei beispielsweise mit Kunststoff beschichtete Gewebebänder, monolithische Kunststoffbänder oder auch modulare Kunststoffbänder, die aus einer Vielzahl aneinandergelenkter Module bestehen, zum Einsatz. Da die Lebensmittel direkt in Kontakt mit den Transportbändern kommen, ist ein regelmässiges Reinigen der Transportbänder und anderer Teile des Fördersystems notwendig, um eine Verunreinigung der Lebensmittel mit alten und evtl. teilweise schon zersetzten Lebensmittelresten und Mikroorganismen, wie z.B. Mikroben, Bakterien, Pilze, Hefen, Viren etc., zu vermeiden. Gute Reinigungseigenschaften sind daher ein wichtiges Erfordernis für Transportbänder, insbesondere Lebensmittel-Transportbänder. Die Transportbänder sowie andere offen zugängliche Teile des Fördersystems sollen bei möglichst geringen Kosten möglichst gut und schnell reinigbar sein.

Bei den modularen Bändern sind zwar die einzelnen Module aus hartem Kunststoff als solche normalerweise gut reinigbar, im Gelenkbereich sind aber typischerweise Spalte vorhanden, in die Lebensmittelreste eindringen und sich verfangen können, welche dann schwierig zu entfernen sind.

Bei den nicht-modularen, kontinuierlichen Transportbändern sind keine Gelenke zur Verbindung von Bandmodulen vorhanden, so dass keine Gelenkbereiche gereinigt werden müssen. Diese kontinuierlichen Transportbänder sind relativ dünn und flexibel ausgebildet, so dass sie um Umlenk- und Antriebsrollen bzw. -zahnräder gebogen und bewegt werden können.

Aus der WO 03/076311 A1 ist beispielsweise ein solches flexibles Transportband bekannt, das eine glatte Transportseite sowie eine Antriebsseite aufweist, auf der in Transportbandlaufrichtung gleichmässig beabstandete, quer zur Transportbandlaufrichtung verlaufende Antriebsrippen angeordnet sind. Das Transportband ist um Antriebsrollen geführt und wird über die Antriebsrippen von den Antriebsrollen angetrieben. Dabei kann das Problem auftreten, dass sich das Transportband auf den Antriebsrollen seitlich verschiebt und sich von diesen löst.

Dieses Problem wird üblicherweise dadurch gelöst, dass seitlich neben dem Transportband Führungselemente angeordnet werden, die ein seitliches Verschieben des Transportbands verhindern. Solche Führungselemente sind beispielsweise Führungsleisten an der Fördervorrichtung oder auch Randscheiben an den Antriebsrollen, die mitrotieren, so dass das Transportband durch Kontakt mit den Führungselementen nicht abgebremst wird.

Solche Führungselemente neben dem Transportband haben aber den Nachteil, dass es zusätzliche Bauteile sind, die die Breite der Fördervorrichtung vergrössern und die auch zusätzlich gereinigt werden müssen. Ausserdem können sie eventuell die Reinigung der Antriebsrollen behindern.

Aus der US 2 770 977 A ist es bekannt, die quer zur Bandlaufrichtung verlaufenden Antriebsrippen eines Flachbands mit Längsrippen zur Längsführung des Bands an Zähnen eines Antriebszahnrads zu versehen. Diese Längsrippen haben den Nachteil, dass sie nur schwer zu reinigende Ecken und Kanten erzeugen.

Der vorliegenden Erfindung liegt daher die Aufgabe zugrunde, ein kontinuierliches Transportband der eingangs erwähnten Art zu schaffen, das in einem gut reinigbaren Fördersystem eine einfache Längsführung des Transportbands ermöglicht.

Diese Aufgabe wird gelöst durch das erfindungsgemässe kontinuierliche Transportband, wie es in Patentanspruch 1 definiert ist. Bevorzugte Ausführungsvarianten ergeben sich aus den abhängigen Patentansprüchen.

Das Wesen der Erfindung besteht im Folgenden: Ein kontinuierliches Transportband weist eine Transportseite und eine Antriebsseite auf. Auf der Antriebsseite sind in Transportbandlaufrichtung gleichmässig beabstandete, quer zur Transportbandlaufrichtung verlaufende Antriebsrippen angeordnet. Die Antriebsrippen weisen Seitenführungselemente zur Längsführung des Transportbands an Zähnen eines Antriebselements auf. Diese Seitenführungselemente sind wellenbergförmig ausgebildet.

Dadurch, dass die Seitenführungselemente auf der Antriebsseite in das Transportband integriert sind, erhöhen sie die Breite der Fördervorrichtung nicht. Die Längsführung des Transportbands erfolgt durch die Zähne eines Antriebselements bzw. mehrerer Antriebselemente, so dass ausserhalb des Transportbands keine zusätzlichen Führungselemente benötigt werden. Die wellenbergförmige Ausbildung der Seitenführungselemente stellt eine gute Reinigbarkeit sicher. Auch sorgt sie neben einer einfachen Längsführung für eine Zentrierung des Transportbands an den Zähnen des Antriebselements bzw. der Antriebselemente.

Als Antriebselement kann beispielsweise ein Antriebszahnrad, eine Antriebsrolle oder eine Antriebswalze dienen.

Mit Vorteil sind beim Transportband in Transportbandlaufrichtung auf der Vorderseite und der Rückseite der Antriebsrippen Seitenführungselemente vorhanden. Dies ergibt auf der Vorderseite und der Rückseite der Antriebsrippen Anlagepunkte für die Zähne eines Antriebselements bzw. mehrerer Antriebselemente. Ausserdem wird das Transportband dadurch stabilisiert.

Vorzugsweise sind die Seitenführungselemente auf der Vorderseite und der Rückseite der Antriebsrippen quer zur Transportbandlaufrichtung zueinander versetzt angeordnet. Dadurch wird das Transportband lokal nicht zu stark versteift.

Mit Vorteil sind die Antriebsrippen jeweils zumindest abschnittsweise wellenförmig ausgebildet. Solche wellenförmigen Antriebsrippen und Seitenführungselemente sind nicht nur wegen ihrer Form gut reinigbar, sondern auch bei geringem Materialaufwand sehr stabil.

Bei einer vorteilhaften Ausführungsvariante weisen die Antriebsrippen jeweils einen im Wesentlichen über ihre ganze

Länge geraden Mittelteil auf. Dies ergibt insgesamt eine einfache und sehr stabile Konstruktion.

Vorzugsweise sind die Antriebsrippen bis auf ihre Längsenden kantenlos ausgebildet und weisen nur runde Übergänge auf. Die Antriebsrippen sind dadurch optimal reinigbar.

Mit Vorteil ist die Anordnung der Seitenführungselemente der Antriebsrippen auf die Anordnung der Zähne eines Antriebselements abgestimmt. Dies stellt eine optimale Längsführung des Transportbands sicher.

Bei einer vorteilhaften Ausführungsvariante weist jede Antriebsrippe mehrere Seitenführungselemente auf, die untereinander unterschiedliche Abstände aufweisen. Dasselbe Transportband ist so mit unterschiedlichen oder unterschiedlich angeordneten Antriebselementen verwendbar.

Mit Vorteil weist das Transportband zwischen den Antriebsrippen dünner ausgebildete Sollbiegestellen auf. Solche Sollbiegestellen erhöhen die Flexibilität des Transportbands und erleichtern dessen Biegen, was die Verwendung kleinerer Antriebselemente und Umlenkräder oder -rollen ermöglicht.

Vorzugsweise weist das Transportband in Transportbandlaufrichtung Verstärkungsfäden auf. Diese Verstärkungsfäden sind entweder gleichmässig über die ganze Bandbreite verteilt, um homogene Bandeigenschaften zu erhalten, oder durch eine definierte inhomogene Verteilung so eingebracht, dass unnötige Verstärkungsfäden eingespart werden können und dass ausserdem ein hygienisch einwandfreies Zuschneiden der Breite des Transportbands - ohne Gefahr der Verletzung der versiegelten Verstärkungsfäden - gewährleistet ist.

Das erfindungsgemässe Transportband wird vorzugsweise mittels eines thermischen Formgebungsverfahrens hergestellt, wobei die Antriebsrippen inklusive Seitenführungselemente und allenfalls Verstärkungsfäden eingearbeitet werden.

Im Folgenden wird das erfindungsgemässe Transportband unter Bezugnahme auf die beigefügten Zeichnungen anhand von drei Ausführungsbeispielen detaillierter beschrieben. Es zeigen:
- Fig. 1: - eine Draufsicht auf ein erstes Ausführungsbeispiel des erfindungsgemässen Transportbands mit abschnittsweise wellenförmigen Antriebsrippen;
- Fig. 2: - eine Seitenansicht des Transportbands von Fig. 1;
- Fig. 3: - eine Frontansicht des Transportbands von Fig. 1;
- Fig. 4 -: eine Perspektivansicht des Transportbands von Fig. 1;
- Fig. 5: - ein Antriebselement in Form eines Antriebszahnrads im Eingriff mit einem Teil des Transportbands von Fig. 1 in einer Perspektivansicht;
- Fig. 6 -: eine teilweise geschnittene Seitenansicht des Antriebszahnrads und Transportbands von Fig. 5;
- Fig. 7: - eine Frontansicht des Antriebszahnrads und Transportbands von Fig. 5;
- Fig. 8: - eine Perspektivansicht eines zweiten Ausführungsbeispiels des erfindungsgemässen Transportbands mit Antriebsrippen mit einem geraden Mittelteil und beidseitigen wellenbergförmigen Vorsprüngen;
- Fig. 9: - eine Seitenansicht eines dritten Ausführungsbeispiels des erfindungsgemässen Transportbands ähnlich dem ersten Ausführungsbeispiel, aber mit zwischen den Antriebsrippen dünner ausgebildeten Sollbiegestellen.

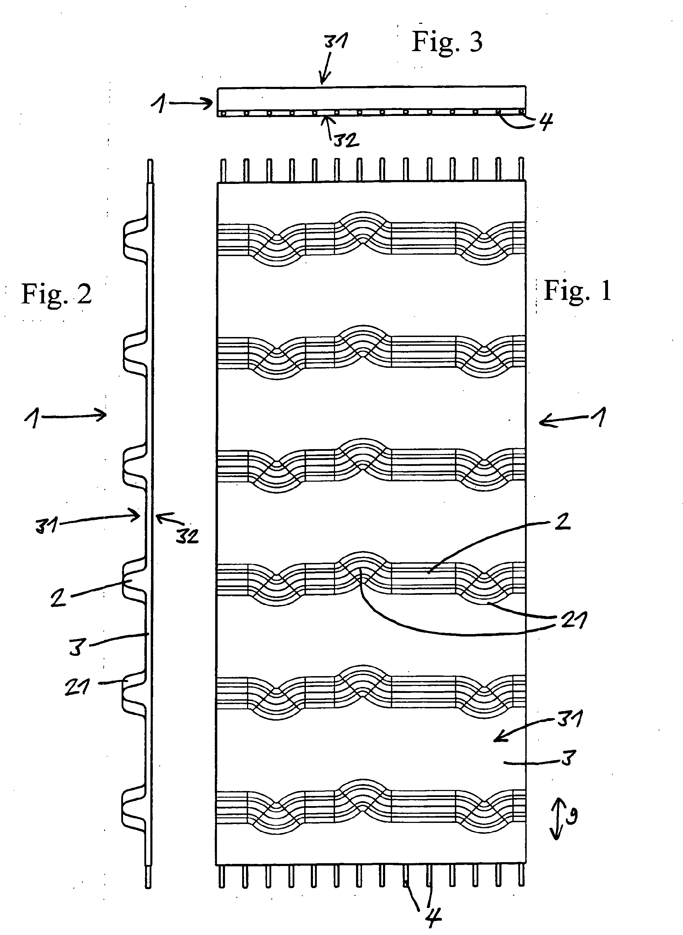

Das in den Fig. 1 bis 4 dargestellte erste Ausführungsbeispiel eines erfindungsgemässen Transportbands 1 umfasst einen flachen Basisteil 3 mit einer Antriebsseite 31 und einer Transportseite 32, die beide über weite Teile glatt ausgebildet sind, um eine gute Reinigung zu ermöglichen. Die Laufrichtung des Transportbands 1 ist mit einem Pfeil 9 angegeben, wobei das Transportband 1 sowohl vor- als auch rückwärts bewegt werden kann. Bei üblichen Anwendungen ist das Transportband 1 durch Verbinden seiner beiden Längsenden endlos gemacht.

Der Basisteil 3 des Transportbands 1 ist mit gleichmässig über die Bandbreite verteilten Verstärkungsfäden 4 in Transportbandlaufrichtung verstärkt. Diese Verstärkungsfäden 4 fangen die auf das Transportband 1 wirkenden Zugkräfte zu einem grossen Teil auf und sorgen dafür, dass sich das Transportband 1 nicht zu stark ausdehnt.

Auf der Antriebsseite 31 befinden sich auf dem Basisteil 3 eine Vielzahl von Antriebsrippen 2, die quer zur Transportbandlaufrichtung 9 über die ganze Breite des Transportbands 1 verlaufen und in Transportbandlaufrichtung 9 in gleichmässigen Abständen äquidistant zueinander angeordnet sind. Die Antriebsrippen 2 sind abschnittsweise wellenförmig ausgebildet, wobei die Wellenberge 21 Seitenführungselemente zur Längsführung des Transportbands 1 an Zähnen eines Antriebszahnrads bilden.

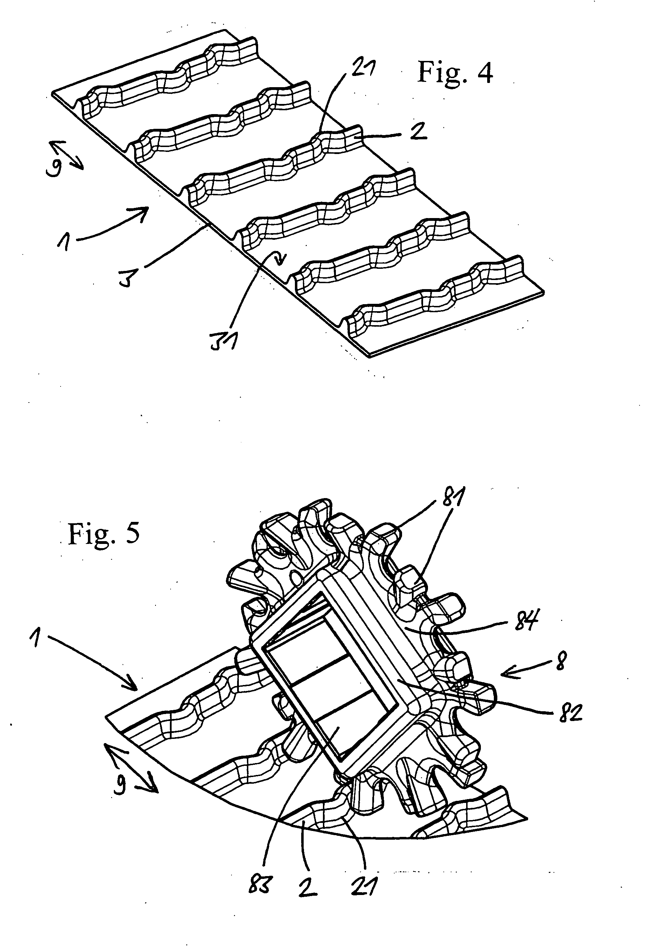

Zur Erleichterung der Reinigung sind die Antriebsrippen 2 bis auf ihre Längsenden kantenlos ausgebildet und weisen nur runde Übergänge auf, was auch auf die Übergange in den Basisteil 3 zutrifft. Die in Fig. 1 und die meisten der in Fig. 4 eingezeichneten Linien der Antriebsrippen 2 sind in Wirklichkeit nicht sichtbare Radiuslinien.

In den Fig. 5 bis 7 ist das Eingreifen eines Antriebselements in Form eines Antriebszahnrads 8 in das Transportband 1 dargestellt. Das Antriebszahnrad 8 umfasst eine Nabe 82, die zur Aufnahme einer im Querschnitt im Wesentlichen quadratischen Welle mit einem im Querschnitt im Wesentlichen quadratischen Durchgang 83 versehen ist. Rund um die Nabe 82 herum erstreckt sich von einer gemeinsamen ringförmigen Basis 84 aus eine Reihe Zähne 81 weitgehend radial nach aussen, wobei die Zähne 81 aber leicht schräg zur jeweiligen Radiuslinie verlaufen, und zwar alternierend zur linken Seite 85 und zur rechten Seite 86 des Antriebszahnrads 8 geneigt. Somit ergeben sich durch diese Zähnespreizung aussen praktisch zwei Reihen Zähne 81, die von einer einzigen ringförmigen Basis 84 ausgehen.

Wie das Transportband 1 ist auch das Antriebszahnrad 8 zum Zwecke der besseren Reinigbarkeit weitgehend kantenlos und es sind wo immer möglich runde Übergänge vorhanden. Die meisten in Fig. 5 gezeichneten Linien des Antriebszahnrads 8 sind in Wirklichkeit nicht sichtbare Radiuslinien.

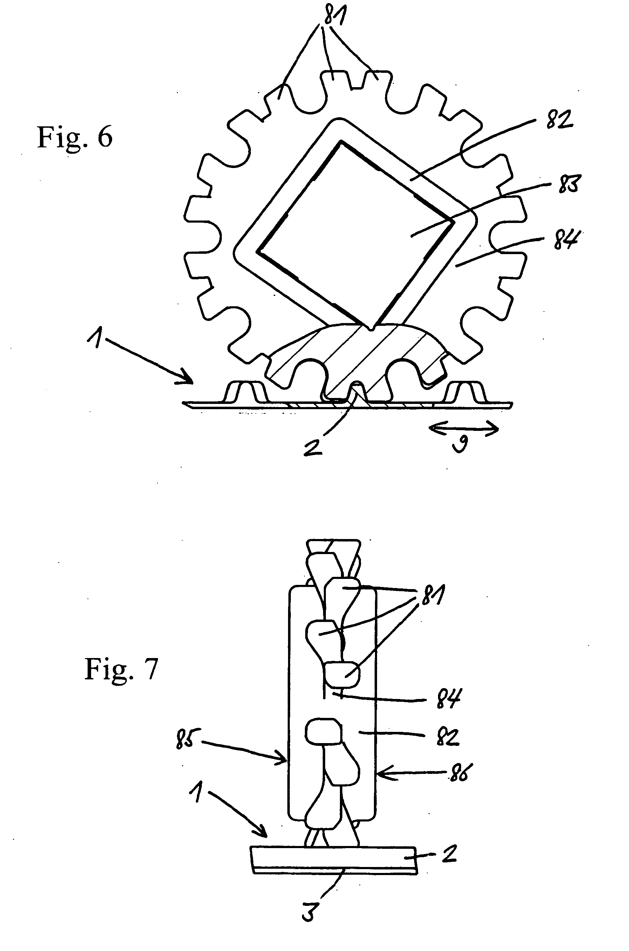

Zum Antrieb des Transportbands 1 hintergreifen die Zähne 81 des Antriebszahnrads 8 die Antriebsrippen 2 des Transportbands 1, wie am besten in den Fig. 5 und 6 ersichtlich. Aufgrund der symmetrischen Ausbildung ist das Transportband 1 in Transportbandlaufrichtung 9 sowohl vorwärts als auch rückwärts bewegbar. Durch die Spreizung der Zähne 81 des Antriebszahnrads 8 wird die Antriebskraft besser verteilt und ausserdem eine gute Reinigbarkeit gewährleistet.

Wie in Fig. 5 erkennbar, bilden die Wellenberge 21 der Antriebsrippen 2 Seitenführungselemente, an denen die Zähne 81 des Antriebszahnrads 8 zur Längsführung des Transportbands 1 seitlich anliegen. Die Wellenform dieser Seitenführungselemente 21 bewirkt eine Zentrierung des Transportbands 1 während des Antriebs durch das Antriebszahnrad 8.

Die Anordnung der Antriebszahnräder 8 eines Fördersystems und die Abstände der Seitenführungselemente 21 (Wellenberge) an den Antriebsrippen 2 sind so aufeinander abgestimmt, dass das Transportband 1 optimal zentriert und längsgeführt wird. Dabei können auf dem Transportband 1 auch mehr Seitenführungselemente 21 als prinzipiell notwendig und eventuell sogar in unterschiedlichen Abständen angeordnet werden, so dass dasselbe Transportband 1 mit unterschiedlichen oder unterschiedlich angeordneten Antriebszahnrädern verwendbar ist.

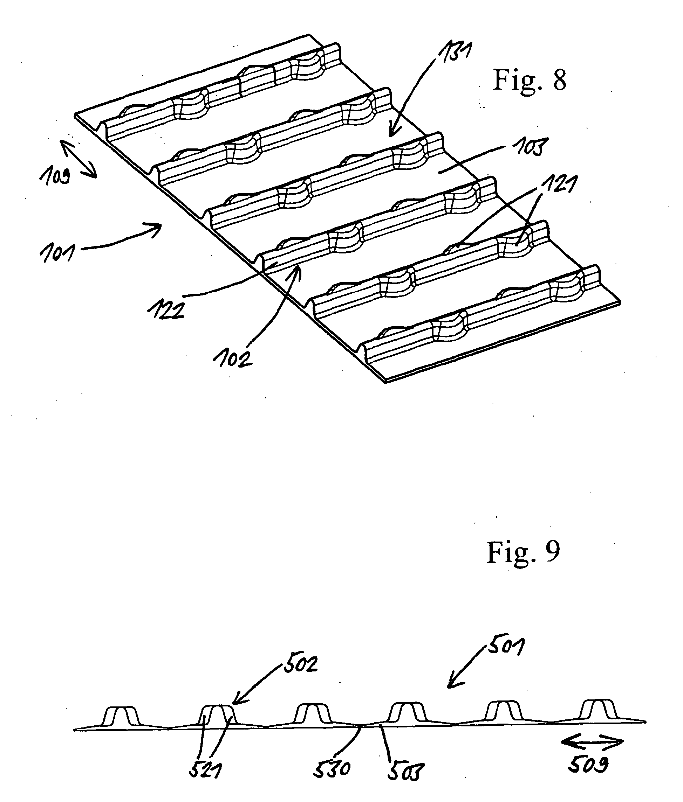

Fig. 8 zeigt ein zweites Ausführungsbeispiel eines erfindungsgemässen Transportbands 101, das einen flachen Basisteil 103 umfasst. Die Laufrichtung des Transportbands 101 ist mit einem Pfeil 109 angegeben, wobei das Transportband 101 wiederum sowohl vor- als auch rückwärts bewegt werden kann. Bei üblichen Anwendungen ist auch das Transportband 101 durch Verbinden seiner beiden Längsenden endlos gemacht.

Auf der Antriebsseite 131 des Transportbands 101 befinden sich auf dem Basisteil 103 eine Vielzahl von Antriebsrippen 102, die quer zur Transportbandlaufrichtung 109 über die ganze Breite des Transportbands 101 verlaufen und in Transportbandlaufrichtung 109 in gleichmässigen Abständen äquidistant zueinander angeordnet sind. Die Antriebsrippen 102 weisen jeweils einen über ihre ganze Länge geraden Mittelteil 122 mit beidseitigen Vorsprüngen 121 auf. Die Vorsprünge 121 sind wellenbergförmig ausgebildet und bilden Seitenführungselemente zur Längsführung des Transportbands 109 an Zähnen eines Antriebszahnrads entsprechend dem ersten Ausführungsbeispiel.

Zur Erleichterung der Reinigung sind die Antriebsrippen 102 wiederum bis auf ihre Längsenden kantenlos ausgebildet und weisen nur runde Übergänge auf, was auch auf die Übergange in den Basisteil 103 zutrifft. Die meisten der in Fig. 8 gezeichneten Linien der Antriebsrippen 102 sind in Wirklichkeit nicht sichtbare Radiuslinien.

In Fig. 9 ist ein drittes Ausführungsbeispiel eines erfindungsgemässen Transportbands 501 dargestellt, das weitgehend dem ersten Ausführungsbeispiel entspricht. Der einzige Unterschied besteht darin, dass der Basisteil 503 zwischen den Antriebsrippen 502, die Wellenberge 521 als Seitenführungselemente umfassen, jeweils dünner ausgebildete Sollbiegestellen 530 aufweist, die die Flexibilität des Transportbands 501 erhöhen und dessen Biegen erleichtern. Die Laufrichtung des Transportbands 501 ist mit einem Pfeil 509 angegeben, wobei das Transportband 501 wiederum sowohl vorals auch rückwärts bewegt werden kann.

Zu den vorbeschriebenen Transportbändern und -systemen sind weitere konstruktive Variationen realisierbar. Hier ausdrücklich erwähnt sei noch:
- Alle diese Transportbänder 1, 101 bzw. 501 können mit Verstärkungsfäden 4 in Längsrichtung bzw. Transportbandlaufrichtung 9, 109 bzw. 509 verstärkt sein. Diese können, wie beim ersten Ausführungsbeispiel dargestellt, gleichmässig über die Bandbreite verteilt sein, um homogene Bandeigenschaften zu erhalten. Alternativ können die Verstärkungsfäden auch durch eine definierte inhomogene Verteilung so eingebracht werden, dass unnötige Verstärkungsfäden eingespart werden können und dass ausserdem ein hygienisch einwandfreies Zuschneiden der Breite des Transportbands - ohne Gefahr der Verletzung der versiegelten Verstärkungsfäden - gewährleistet ist.
- Anstelle des Antriebszahnrads 8 können mit den erfindungsgemässen Transportbändern auch andere Antriebszahnräder, Antriebsrollen oder Antriebswalzen verschiedenster Art verwendet werden.

## Patentansprüche

1. Kontinuierliches Transportband (1; 101; 501) mit einer Antriebsseite (31; 131), auf der in Transportbandlaufrichtung (9; 109; 509) gleichmässig beabstandete, quer zur Transportbandlaufrichtung (9; 109; 509) verlaufende Antriebsrippen (2; 102; 502) angeordnet sind, die Seitenführungselemente (21; 121; 521) zur Längsführung des Transportbands (1; 101; 501) an Zähnen (81) eines Antriebselements (8) aufweisen, **dadurch gekennzeichnet, dass** die Seitenführungselemente (21; 121; 521) wellenbergförmig ausgebildet sind.

2. Transportband (1; 101; 501) nach Anspruch 1,
**dadurch gekennzeichnet, dass** in Transportbandlaufrichtung (9; 109; 509) auf der Vorderseite und der Rückseite der Antriebsrippen (2; 102; 502) Seitenführungselemente (21; 121; 521) vorhanden sind.

3. Transportband (1; 101; 501) nach Anspruch 2,
**dadurch gekennzeichnet, dass** die Seitenführungselemente (21; 121; 521) auf der Vorderseite und der Rückseite der Antriebsrippen (2; 102; 502) quer zur Transportbandlaufrichtung (9; 109; 509) zueinander versetzt angeordnet sind.

4. Transportband (1; 101; 501) nach einem der Ansprüche 1 bis 3, **dadurch gekennzeichnet, dass** die Antriebsrippen (2; 102; 502) jeweils zumindest abschnittsweise wellenförmig ausgebildet sind.

5. Transportband (101) nach einem der Ansprüche 1 bis 4, **dadurch gekennzeichnet, dass** die Antriebsrippen (102) jeweils einen im Wesentlichen über ihre ganze Länge geraden Mittelteil (122) aufweisen.

6. Transportband (1; 101; 501) nach einem der
Ansprüche 1 bis 5, **dadurch gekennzeichnet, dass** die Antriebsrippen (2; 102; 502) bis auf ihre Längsenden kantenlos ausgebildet sind und nur runde Übergänge aufweisen.

7. Transportband (1; 101; 501) nach einem der Ansprüche 1 bis 6, **dadurch gekennzeichnet, dass** die Anordnung der Seitenführungselemente (21; 121; 521) der Antriebsrippen (2; 102; 502) auf die Anordnung der Zähne (81) eines Antriebselements (8) abgestimmt ist.

8. Transportband (1; 101; 501) nach einem der Ansprüche 1 bis 7, **dadurch gekennzeichnet, dass** jede Antriebsrippe (2; 102; 502) mehrere Seitenführungselemente (21; 121; 521) aufweist, die untereinander unterschiedliche Abstände aufweisen.

9. Transportband (501) nach einem der Ansprüche 1 bis 8, **dadurch gekennzeichnet, dass** es zwischen den Antriebsrippen (502) dünner ausgebildete Sollbiegestellen (530) aufweist.

10. Transportband (1; 101; 501) nach einem der Ansprüche 1 bis 9, **dadurch gekennzeichnet, dass** es in Transportbandlaufrichtung (9; 109; 509) Verstärkungsfäden (4) aufweist.

## Claims

1. Continuous conveyor belt (1; 101; 501) with a driving side (31; 131), on which driving ridges (2; 102; 502) are arranged which are equally spaced apart in the direction of travel of the conveyor belt (9; 109; 509) and which run transverse to the direction of travel of the conveyor belt (9; 109; 509), which have lateral guiding elements (21; 121; 521) for longitudinally guiding the conveyor belt (1; 101; 501) on teeth (81) of a driving element (8), **characterised in that** the lateral guiding elements (21; 121; 521) are formed in the shape of wave crests.

2. Conveyor belt (1; 101; 501) according to claim 1, **characterised in that** lateral guiding elements (21; 121; 521) are present on the front side and the rear side of the driving ridges (2; 102; 502) in the direction of travel of the conveyor belt (9; 109; 509).

3. Conveyor belt (1; 101; 501) according to claim 2, **characterised in that** the lateral guiding elements (21; 121; 521) on the front side and the rear side of the driving ridges (2; 102; 502) are displaced from each other transverse to the direction of travel of the conveyor belt (9; 109; 509).

4. Conveyor belt (1; 101; 501) according to any one of the claims 1 to 3, **characterised in that** each of the driving ridges (2; 102; 502) are, at least in sections, formed in the shape of waves.

5. Conveyor belt (101) according to any one of the claims 1 to 4, **characterised in that** the driving ridges (102) each have a straight middle section (122) essentially over their whole length.

6. Conveyor belt (1; 101; 501) according to any one of the claims 1 to 5, **characterised in that** the driving ridges (2; 102; 502) are formed without angles up to their longitudinal ends and have only rounded transitions.

7. Conveyor belt (1; 101; 501) according to any one of the claims 1 to 6, **characterised in that** the configuration of the lateral guiding elements (21; 121; 521) of the driving ridges (2; 102; 502) is aligned with the configuration of the teeth (81) of a driving element (8).

8. Conveyor belt (1; 101; 501) according to any one of the claims 1 to 7, **characterised in that** each driving ridge (2; 102; 502) has several lateral guiding elements (21; 121; 521), which have different distances among themselves.

9. Conveyor belt (501) according to any one of the claims 1 to 8, **characterised in that** between the driving ridges (502) it has predetermined bending sites (530) which are formed thinner.

10. Conveyor belt (1; 101; 501) according to any one of the claims 1 to 9, **characterised in that** it has reinforcing threads (4) in the direction of travel of the conveyor belt (9; 109; 509).

## Revendications

1. Bande transporteuse continue (1 ; 101 ; 501) avec un côté d'entraînement (31 ; 131), sur lequel sont disposées des nervures d'entraînement (2 ; 102 ; 502) équidistantes dans le sens d'avancement de la bande transporteuse (9 ; 109 ; 509) et s'étendant transversalement au sens d'avancement de la bande transporteuse (9 ; 109 ; 509), lesquelles présentent des éléments de guidage latéraux (21 ; 121 ; 521) pour le guidage longitudinal de la bande transporteuse (1 ; 101 ; 501) au niveau de dents (81) d'un élément d'entraînement (8), **caractérisée en ce que** les éléments de guidage latéraux (21 ; 121 ; 521) sont réalisés en forme de crêtes de vagues.

2. Bande transporteuse (1 ; 101 ; 501) selon la revendication 1, **caractérisée en ce que** des éléments de guidage latéraux (21 ; 121 ; 521) sont prévus dans le sens d'avancement de la bande transporteuse (9 ; 109 ; 509) sur la face avant et la face arrière des nervures d'entraînement (2 ; 102 ; 502).

3. Bande transporteuse (1 ; 101 ; 501) selon la revendication 2, **caractérisée en ce que** les éléments de guidage latéraux (21 ; 121 ; 521) sont disposés de manière décalée l'un par rapport à l'autre sur la face avant et la face arrière des nervures d'entraînement (2 ; 102 ; 502) transversalement au sens d'avancement de la bande transporteuse (9 ; 109 ; 509).

4. Bande transporteuse (1 ; 101 ; 501) selon l'une quelconque des revendications 1 à 3, **caractérisée en ce que** les nervures d'entraînement (2 ; 102 ; 502) sont chacune réalisées au moins partiellement de manière ondulée.

5. Bande transporteuse (101) selon l'une quelconque des revendications 1 à 4, **caractérisée en ce que** les nervures d'entraînement (102) présentent respectivement une partie médiane (122) essentiellement rectiligne sur toute leur longueur.

6. Bande transporteuse (1 ; 101 ; 501) selon l'une quelconque des revendications 1 à 5, **caractérisée en ce que** les nervures d'entraînement (2 ; 102 ; 502) sont réalisées sans arête à l'exception de leurs extrémités longitudinales et ne présentent que des transitions arrondies.

7. Bande transporteuse (1 ; 101 ; 501) selon l'une quelconque des revendications 1 à 6, **caractérisée en ce que** l'agencement des éléments de guidage latéraux (21 ; 121 ; 521) des nervures d'entraînement (2 ; 102 ; 502) est accordé sur l'agencement des dents (81) d'un élément d'entraînement (8).

8. Bande transporteuse (1 ; 101 ; 501) selon l'une quelconque des revendications 1 à 7, **caractérisée en ce que** chaque nervure d'entraînement (2 ; 102 ; 502) présente plusieurs éléments de guidage latéraux (21 ; 121 ; 521) qui présentent des distances différentes entre eux.

9. Bande transporteuse (501) selon l'une quelconque des revendications 1 à 8, **caractérisée en ce qu'**elle présente entre les nervures d'entraînement (502) des points de pliage imposés (530) concus plus fins.

10. Bande transporteuse (1 ; 101 ; 501) selon l'une quelconque des revendications 1 à 9, **caractérisée en ce qu'**elle présente des fils de renfort (4) dans le sens d'avancement de la bande transporteuse (9 ; 109 ; 509).
